# EUROPEAN PATENT SPECIFICATION

(11) **EP 4 357 086 B1**
(45) Date of publication and mention of the grant of the patent: **03.12.2025**
(21) Application number: 22202975.3
(22) Date of filing: 21.10.2022
(51) Int. Cl.: B25J 15/00, B25J 15/02, B25J 15/08

(54) **AN AUTOMATIC GRIPPER FOR HANDLING REBARS AND A METHOD FOR ADJUSTING THE AUTOMATIC GRIPPER**
AUTOMATISCHER GREIFER ZUR HANDHABUNG VON STANGEN UND VERFAHREN ZUR EINSTELLUNG DES AUTOMATISCHEN GREIFERS
PINCE AUTOMATIQUE POUR MANIPULER DES BARRES D'ARMATURE ET PROCÉDÉ DE RÉGLAGE DE LA PINCE AUTOMATIQUE

(43) Date of publication of application: 24.04.2024
(73) Proprietor: PEDAX GmbH, 54634 Bitburg (DE)
(72) Inventor: Weimann, Peter, 54634 Bitburg (DE)
(74) Representative: Patrade A/S

(56) References cited:
- EP-B1- 3 600 797
- CN-A- 109 070 362
- DE-U1- 202020 004 206
- US-B2- 10 695 916
- MITAL A ET AL: "Robot cleaning of underground liquid storage tanks: Feasibility and design considerations", ROBOTICS AND AUTONOMOUS SYSTEMS, ELSEVIER BV, AMSTERDAM, NL, vol. 20, no. 1, 1 April 1997 (1997-04-01), pages 49 - 60, XP004075313, ISSN: 0921-8890, DOI: 10.1016/S0921-8890(96)00038-3

## Description

### Field of the Invention

The present invention relates to a gripper, for a robotic arm, configured for gripping rebars. The gripper comprises a first clamp and a second clamp each adapted for automatic controlled operation between an open position and a closed position to clamp around the rebar for holding and displacing the rebar. The gripper further comprises a gripper base comprising robot fastening means for mounting on the robotic arm. The gripper base comprises a first guide and a second guide arranged aligned in a gripper plane. The first clamp is displaceable mounted in the first guide and the second clamp is displaceable mounted in the second guide.

The gripper base comprises a pivotal arm arranged to be rotated in a plane parallel to the gripper plane. The pivotal arm, which comprises at least part of the first guide, can be automatically rotated around a rotational axis perpendicular to the gripper plane between a first angular end position and a second angular end position.

### Background of the Invention

In production of rebars and stirrups picking robots are used for increasing productivity and for increasing safety for the production facility workers.

The picking robots typically use one or two clamps for picking a rebar or a bend rebar, such as stirrup, directly from a cutter and/or bending machine, and move them to a predefined unloading area.

Rebar and stirrup picking robots often need to be adaptable as the shape and size of the rebars may change depending on the production series and subsequent requirements for placement of clamps and weight distribution.

To cope with the changing size and shape of the rebars, the clamps are typically arranged movable relative to one another. Even with the adjustable clamps, limitations in respect to the size of objects to be handled by the robot is observed because of weight distribution and/or length of the rebar.

As examples of known picking robots can be mentioned by reference:
DE202020004206 concerning a flexible adaptive gripper, which adapts to individual surface geometries and can grab different components, transport and lay them down and where arms can be swivelled up to 360° by using turning modules and each arm is equipped with rotary modules.
US 10695916 concerning end effectors having reconfigurable vacuum heads for picking up thermoplastic parts of thermoplastic composite laminated articles and to be coupled to a robot. The end effector further includes an arm to adjustably position a vacuum head relative to another vacuum head.
EP3600797 concerning a handling apparatus for products, in particular metal stirrups and similar products.

### Object of the Invention

One object of the present invention is to achieve an adjustable gripper for automated handling of elongated rebars in both straight and bended form and a method of adjustment of the same gripper.

A further objective is to achieve an automated adjustable gripper and a method of adjusting the same gripper.

Yet a further objective is to achieve optimized operation of an automated production line by use of an adjustable gripper for fast and simple adjustment of the gripper for optimal handling of the rebars.

### Description of the Invention

One object of the invention is achieved by a gripper for a robotic arm, configured for gripping rebars.

The gripper comprises a first clamp and a second clamp each adapted for automatic controlled operation between an open position and a closed position, wherein the closed position is a position where the clamp clamps around the rebar such that the rebar can be displaced.

The gripper furthermore comprises a gripper base comprising robot fastening means adapted to be mounted on the robotic arm.

The gripper base furthermore comprises a first guide and a second guide arranged aligned in a gripper plane. The first clamp is displaceable mounted in the first guide and the second clamp is displaceable mounted in the second guide.

The gripper base furthermore comprises a pivotal arm arranged to be rotated in a plane parallel to the gripper plane. The first guide at least partially arranged on the pivotal arm.

The pivotal arm can be automatically rotated around a rotational axis perpendicular to the gripper plane between a first angular end position and a second angular end position.

The first guide comprises a first guide arm part arranged on the pivotal arm and a first guide base part arranged on the gripper base, and the second guide is arranged on the gripper base.

The term rebars comprises both straight and bent rebars such as stirrups and similar.

The gripper is suitable for handling rebars but may be suitable for handling comparable elongated items in straight or bended form.

When the clamps are in an open position, the clamps are configured for receiving a rebar to be grasped or held by the clamps. The clamps may grasp the rebar directly from a rebar processing machine when the first clamp and/or the second clamp move into a closed position to clamp around the rebar to secure it.

As the rebar is secured in the clamps, the robotic arm moves the gripper with the rebar to an unloading area. At the unloading area, the clamps adjust to an open position thus releasing the rebars in the predefined unloading area. The robotic arm may move the gripper back to the rebar processing machine for the same operation or may adjust the positioning of the clamps and pivotal arm to be able to handle a rebar of a different size and/or shape. Using two clamps helps stabilize the rebar during relocation by creating a better weight distribution and helps counteract shear caused by the weight and shape of the rebar.

The gripper may use a single clamp for clamping and relocating a rebar. A single clamp may be used for small rebars, small closed bended rebars and similar shapes.

The first clamp and the second clamp may be configured for synchronized movement between the open position and the closed position.

One of the drawbacks of existing grippers is their inability to adapt to a variety of different shapes and larger sizes of rebars. As a result, the dimension and shape of the rebars are not restricted based on the abilities of the rebar processing machine but rather on the dimensional limitation of the rebar gripper. The pivotal arm increases the span between clamps and makes it possible to grab linear rebars without having an additional clamp. Additionally, the pivotal arm makes it possible to grab rebars in odd shapes having no 90-degree angles.

An advantage of the automatic gripper comprising a pivotal arm is the ability to safely remove straight rebars, rebars with multiple angled sections, and large straight or bent rebars from a rebar processing machine and move the rebar to a predefined unloading area.

An additional advantage is an easy and fast reconfiguration of the first clamp, second clamp, and the angular position of the pivotal arm, thereby allowing the gripper to adjust to a change in the shape and size of a rebar from the rebar processing machine.

The gripper's ability to safely remove rebars in a variety of shape and sizes and the automatic reconfiguration of the clamps and pivotal arm ensures a stable production line and process without the need for an operator to intervene. A significant advantage of the gripper is thereby an increased productivity of the production line.

In one aspect, the first clamp may be rotatably attached to the first guide and/or the second clamp may be rotatably attached to the second guide. The rotating clamps thus enable the first clamp and/or the second clamp to rotate in an axis perpendicular to the gripper plane to change the direction of the rebar receiving end of the clamps.

The first clamp may be releasably mounted in the first guide and the second clamp may be releasably mounted in the second guide. The clamps being releasably mounted in the guides ensure that each clamp can easily be repaired or replaced in case of failure or upgrades.

The clamps may be pneumatic, hydraulic or electric operated clamps.

The robot fastening means may releasably mount the gripper to a robotic arm by means of electromagnetism, bolts, nuts, or screws.

The gripper may comprise a housing covering a majority of the gripper base.

The first guide arranged in the first angular end position may by perpendicular to the second guide.

In one embodiment, the gripper may comprise locking means for locking the pivotal arm in an angular position between the first angular end position and the second angular end position. The locking means ensure that the pivotal arm stays in the predefined position and prevent that the weight of the rebar causes displacement of the pivotal arm, thus obstructing the clamps' ability to effectively move the rebar to the predefined unloading area.

In one embodiment of the gripper, the pivotal arm may be rotated between 0-270 degrees, 0-180 degrees, or preferably 0-90 degrees.

The pivotal arm in the first angular end position may be arranged in a 90-degree angle from the second guide.

The pivotal arm in the second angular end position may be arranged in a 180-degree angle counter-clockwise from the second guide such that the part of the first guide arranged on the pivotal arm is substantially parallel to the second guide.

In one aspect, the pivotal arm in the second angular end position may be arranged in a 270-degree angle counter-clockwise from the second guide such that the part of the first guide arranged on the pivotal arm is substantially perpendicular to the second guide.

In another aspect, the pivotal arm in the second angular end position may be arranged in a 360-degree angle counter-clockwise from the second guide such that the part of the first guide arranged on the pivotal arm is substantially parallel to the second guide.

In an aspect, the angular position of the pivotal arm may be defined by incremental rotation.

In another aspect, the angular position of the pivotal arm may be defined by a stepless rotation.

In one embodiment of the gripper, the locking means may be mechanical locking means comprising pins and holes arranged in angular steps configured for receiving the pins for locking the angular position of the pivotal arm.

The spacing between the holes may define the angular steps. The angular steps may comprise predefined increments such as 5-degree increments, 10-degree increments, 15-degree increments, 20-degree increments, or 25-degree increments. The predefined increments may ensure precision and prevent errors when rotating the pivotal arm to the desired angular position.

In one embodiment of the gripper, the pins for locking the angular position of the pivotal arm may be electrically operated pins, pneumatic operated locking pins, hydraulic operated pins, or spring activated pins.

In one aspect, the angular position of the pivotal arm is defined by movement of the robotic arm.

In one embodiment of the gripper, the first guide and the second guide may be linear guides.

According to the invention, the first guide comprises a first guide arm part arranged on the pivotal arm and a first guide base part arranged on the gripper base, and the second guide is arranged on the gripper base.

In one embodiment of the gripper, the first clamp mounted in the first guide may be displaceable in both the first guide arm part and the first guide base part when the pivotal arm is in the first angular end position.

In one embodiment of the gripper, the first clamp mounted in the first guide may be displaceable in the first guide arm part when the pivotal arm is in a position different from the first angular end position.

An advantage of dividing the first guide is maintaining stability and avoid vibrations in the pivotal arm.

In one aspect, the first guide arm part and the first guide base part are approximately the same size.

In one embodiment, the gripper may further comprise a drive shaft adapted to be controlled by a motor. The drive shaft may be arranged aligned with the rotational axis and configured for rotating the pivotal arm.

In one aspect, the motor may be arranged on the robotic arm.

In another aspect, the gripper may comprise the motor, wherein the motor may be arranged on the gripper base or on a gripper housing.

In one embodiment of the gripper being controlled by a motor, the locking means may be motor locking and/or brakes.

In one embodiment of the gripper, the first clamp may be automatically displaceable between an inner and an outer end position in the first guide, and the second clamp may be automatically displaceable between an inner and an outer end position in the second guide.

The inner position of each clamp in the appertaining guide is defined by the proximity to the rotational axis. Likewise, the outer end position of each clamp in the appertaining guide is defined by an increased distance to the rotational axis.

In an aspect, the outer end position of the first clamp in the first guide may be limited to the part of the first guide arranged on the pivotal arm when the pivotal arm is in a position different from the first angular end position.

In one embodiment, the gripper may further comprise a controller configured to control the angular position of pivotal arm and/or the position of the first clamp and/or the second clamp. The controller may receive input concerning the rebar output of the rebar processing machine and adjust the clamps accordingly.

The gripper mounted on the robotic arm may have some geometric limitations when adjusting the first clamp, the second clamp, and the angular position of the pivotal arm.

The controller may determine the order of which to adjust the first clamp, the second clamp, and the angular position of the pivotal arm based on a predefined order dependant on the size and shape of the rebar.

A further object of the invention is achieved by a robotic arm for handling rebars of variable shape and size comprising the gripper.

A further object of the invention is achieved by a method of adjusting the position of the first clamp and the second clamp of the gripper. The method comprises an act of rotating the pivotal arm relative to the gripper base around a rotational axis perpendicular to the gripper plane and/or adjusting the position of the first clamp in the first guide and/or the second clamp in the second guide.

A clamp configurator may assist the robotic arm in adjusting the position of the first clamp in the first guide and/or the second clamp in the second guide, and/or adjusting the angular position of the pivotal arm. The clamp configurator may be a fixed anchor, configured for releasably fixing a clamp. Each clamp is individually displaced in the guide as the robotic arm move the gripper along the guide associated with the clamp fixed in the clamp configurator.

When the first clamp is releasably fixed in the clamp configurator, the robotic arm may rotate the gripper around the fixed first clamp in a plane parallel to the gripper plane, thus changing the angular position of the pivotal arm.

In a further objective of the invention a computer program is disclosed. The computer program may comprise instructions to execute one or more of the steps of the disclosed methods.

In a further objective of the invention a computer-readable medium is disclosed. The computer-readable medium may have stored thereon the above disclosed computer program.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.
Figure 1 illustrates the gripper seen from the top and the bottom;
Figure 2 illustrates different angular positions of the pivotal arm;
Figure 3 illustrates the locking means of figure 1;
Figure 4 illustrates the gripper with a housing;
Figure 5 illustrates the gripper mounted on a robotic arm in a production facility.

### Detailed Description of the Invention

| | |
|---|---|
| Gripper | 10 |
| Gripper base | 11 |
| Gripper plane | 12 |
| First guide | 20 |
| First guide arm part | 20a |
| First guide base part | 20b |
| Second Guide | 21 |
| First clamp | 30a |
| Second clamp | 30b |
| Pivotal arm | 40 |
| First angular end position | 41a |
| Second angular end position | 41b |
| Rotational axis | 42 |
| Locking means | 50 |
| Mechanical locking means | 51 |
| Pins | 52 |
| Holes | 53 |
| Angular steps | 54 |
| Robotic arm | 60 |
| Robot fastening means | 61 |
| Clamp configurator | 70 |
| Rebar | 80 |

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items.

In the drawings, when a layer, area, element, or plate is referred to as being "on" another layer, area, element, or plate, it may be directly on the other layer, area, element, or plate, or intervening layers, areas, elements, or plates may be present there between. Conversely, when a layer, area, element, or plate is referred to as being "directly on" another layer, area, element, or plate, there are no intervening layers, areas, elements, or plates there between. Further when a layer, area, element, or plate is referred to as being "below" another layer, area, element, or plate, it may be directly below the other layer, area, element, or plate, or intervening layers, areas, elements, or plates may be present there between. Conversely, when a layer, area, element, or plate is referred to as being "directly below" another layer, area, element, or plate, there are no intervening layers, areas, elements, or plates there between.

The spatially relative terms "lower" or "bottom" and "inner" or "outer" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or operation, in addition to the orientation depicted in the drawings. For example, in the case where a device illustrated in the drawings is turned over, elements described as being on the "lower" side of other elements, or "below" or "beneath" another element would then be oriented on "upper" sides of the other elements, or "above" another element. Accordingly, the illustrative term "below" or "beneath" may include both the "lower" and "upper" orientation positions, depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below, and thus the spatially relative terms may be interpreted differently depending on the orientations described.

The terminology used herein is for the purpose of describing particular examples only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Like reference numerals refer to like elements throughout the specification. Variations from the shapes of the illustrations as a result, for example, of manufacturing techniques and/or tolerances, are to be expected. Thus, examples described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims. Some of the parts which are not associated with the description may not be provided in order to specifically describe exemplary examples of the present disclosure.

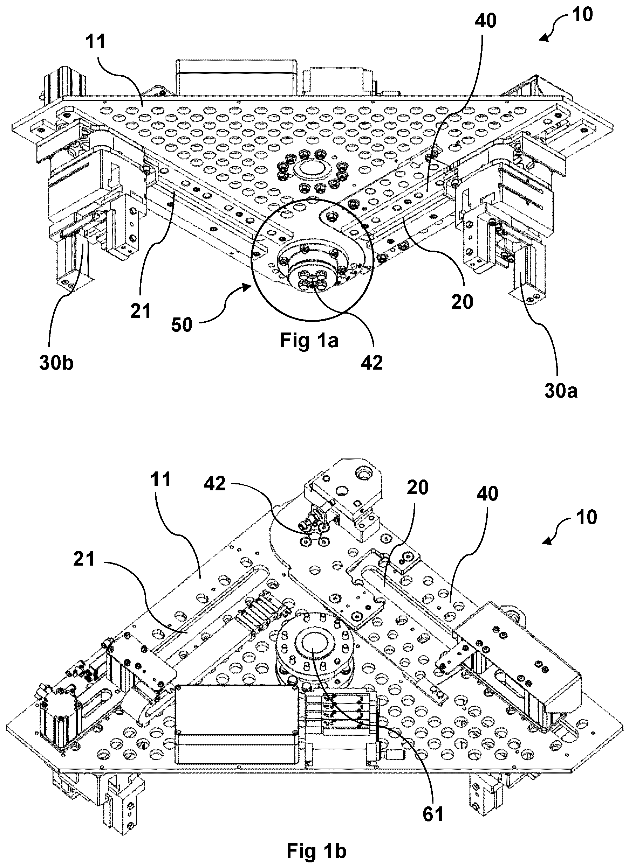

Fig 1a and 1b show an embodiment of a gripper 10 for a robotic arm 60 configured for gripping rebars 80. The gripper 10 comprises a first clamp 30a and a second clamp 30b each adapted for automatic controlled operation between an open position and a closed position. Fig 1a shows the first clamp 30a and the second clamp 30b in an open position allowing a rebar 80 to be positioned in the clamps. When the first clamp 30a and/or the second clamp 30b move into a closed position, the two clamps 30a, 30b clamp around the rebar 80. As the rebar 80 is secured in the clamps 30a, 30b, the rebar 80 can be displaced or moved to an unloading area.

The gripper comprises a gripper base 11 comprising robot fastening means 61 adapted to be mounted on the robotic arm 60. The gripper base 11 further comprises a first guide 20 and a second guide 21 arranged aligned in a common gripper plane 12. The first clamp 30a is displaceable mounted in the first guide 20 while the second clamp 30b is displaceable mounted in the second guide 21. The first and second guides 20,21 may be linear guides as illustrated on figure 1a and 1b.

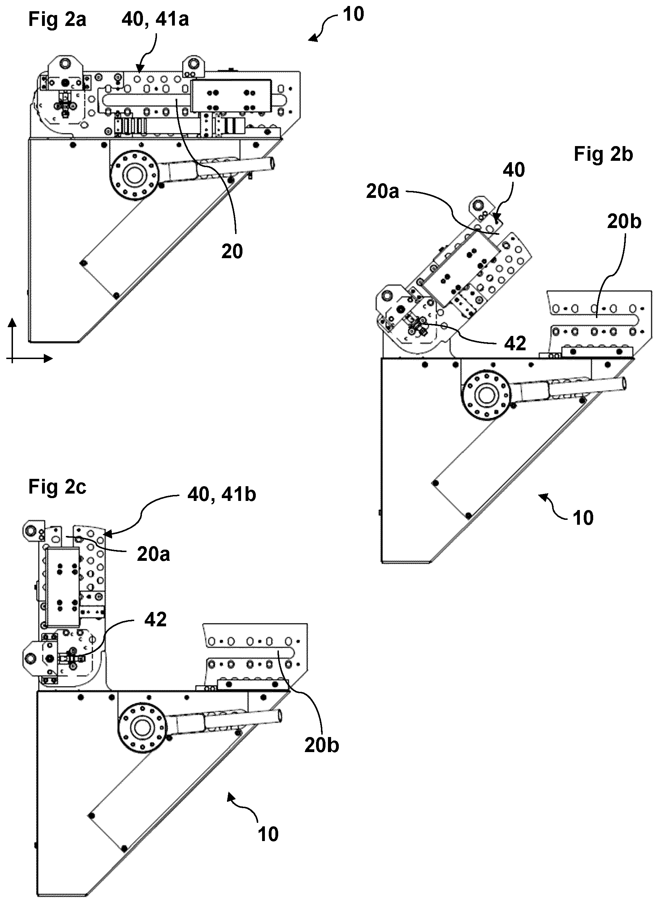

The gripper base 11 comprises a pivotal arm 40 arranged to be automatically rotated in a plane parallel to the gripper plane 12 around a rotational axis 42 perpendicular to the gripper plane 12. The pivotal arm 40 is rotatable between a first angular end position 41a and a second angular end position 41b, as seen on fig. 2.

The first guide 20 comprises a first guide arm part 20a arranged on the pivotal arm 40 and a first guide base part 20b arranged on the gripper base 11. The second guide 21 is also arranged on the gripper base 11.

The pivotal arm 40 shown in figure 2 can be rotated between 0-90 degrees. In other embodiments, the pivotal arm 40 can be rotated between 0-180 degrees or 0-270 degrees.

In fig. 2a, the pivotal arm 40 is at the first angular end position 41a. The pivotal arm 40 is rotated 0 degrees and is positioned in a 90-degree angle counterclockwise from the second guide 21. The first clamp 30a is automatically displaceable between an inner and an outer end position in the first guide 20.

In fig. 2b, the pivotal arm 40 is locked in a position between the first angular end position 41a as seen in fig. 2a and the second angular end position 41b as seen in fig. 2c.

In fig. 2c, the pivotal arm 40 is at the second angular end position 41b. The pivotal arm 40 is rotated 90 degrees from the first angular end position 41b and is positioned in a 180-degree angle counterclockwise from the second guide 21.

When the pivotal arm 40 is in a position different from the first angular end position 41a, the first clamp 30a is displaceable in the first guide arm part. The second clamp 30b is automatically displaceable between an inner and an outer end position in the second guide 21.

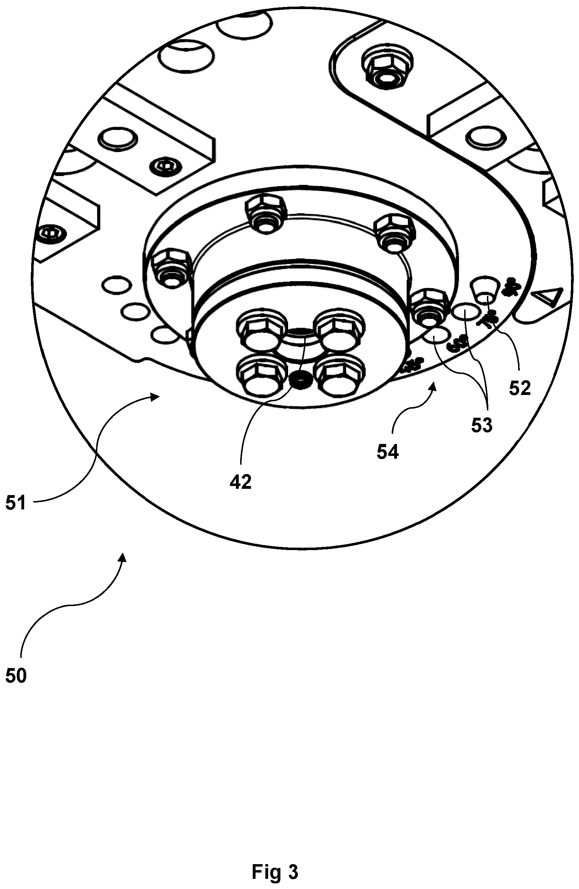

Fig. 1a and 3 shows the gripper comprising locking means 50 for locking the pivotal arm 40 in an angular position between the first angular end position 41a and the second angular end position 41b. The shown locking means 50 is mechanical locking means 51 comprising pins 52 and holes 53. The pins 52 and holes 53 are arranged in angular steps 54 in 15-degree increments configured for receiving the pins 52 for locking the angular position of the pivotal arm 40.

The pins 52 for locking the gripper 10 may be pneumatic operated locking pins, hydraulic operated pins, or spring activated pins.

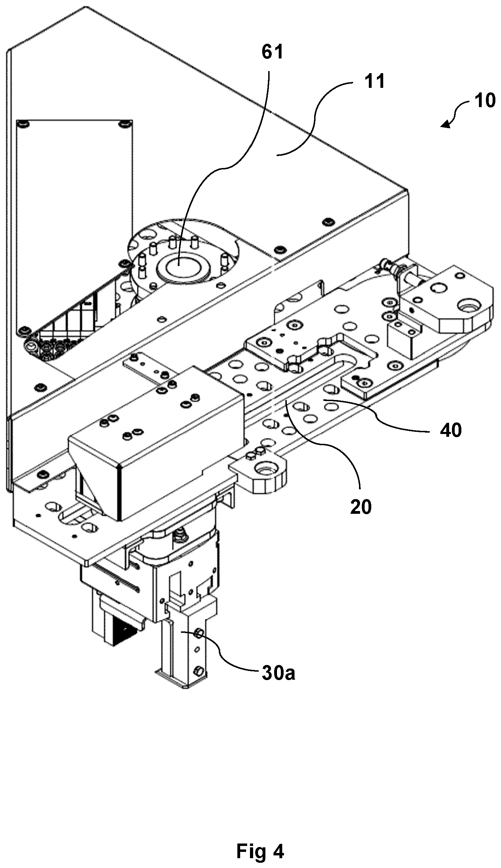

Figure 4 shows the gripper 10 comprising a housing covering a majority of the gripper base 11. The housing has an aperture for the accessing the robot fastening means 61 to enable fastening the gripper 10 to a robot arm 60. The housing does not intersect with the pivotal arm 40, thus allowing the pivotal arm 40 to rotate between the first angular end position 41a and the second angular end position 41b.

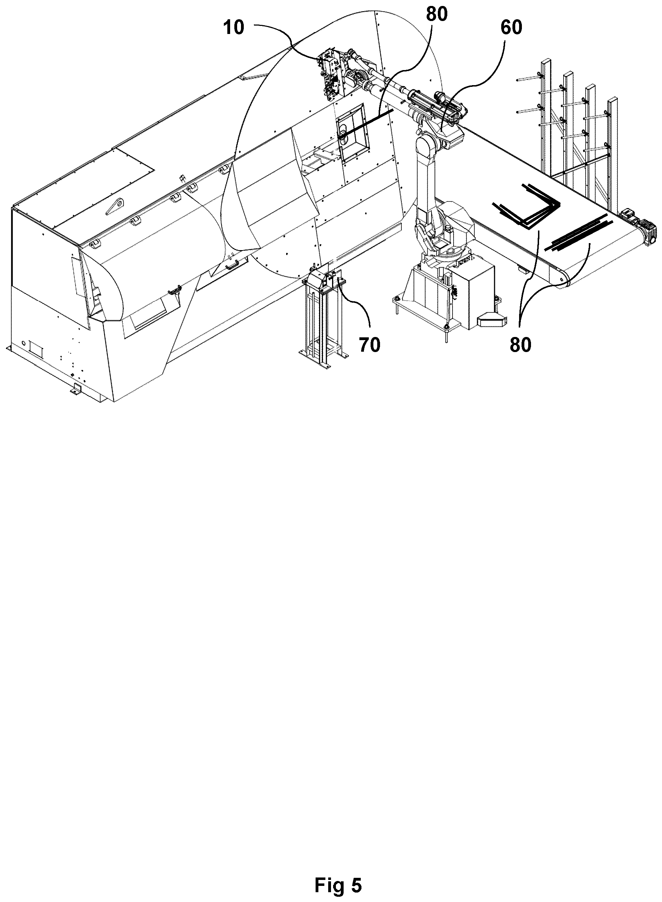

Figure 5 illustrates the gripper 10 fastened to a robotic arm 60 in a production facility. The robotic arm 60 with the mounted gripper 10 removes each rebar 80 from the rebar processing machine and places each rebar 80 in a predefined unloading area.

The robotic arm 60 may use a clamp configurator 70 to automatically adjust the position of the first clamp 30a in the first guide 20 and/or the second clamp 30b in the second guide 21 and/or the angular position of the pivotal arm 40.

## Claims

1. Gripper (10) for a robotic arm (60), said gripper (10) being configured for gripping rebars (80), said gripper (10) comprises:
- a first clamp (30a) and a second clamp (30b) each adapted for automatic controlled operation between an open position and a closed position, wherein the closed position is where the clamp clamps around the rebar (80) such that the rebar (80) can be displaced; and
- a gripper base (11) comprising robot fastening means (61) adapted to be mounted on the robotic arm (60), a first guide (20) and a second guide (21), said first and second guide is arranged aligned in a gripper plane (12), wherein the first clamp (30a) is displaceable mounted in the first guide (20) and the second clamp (30b) is displaceable mounted in the second guide (21),
wherein the gripper base (11) comprises a pivotal arm (40) arranged to be rotated in a plane parallel to the gripper plane (12), wherein the first guide (20) is at least partially arranged on the pivotal arm (40), and wherein the pivotal arm (40) can be automatically rotated around a rotational axis (42) perpendicular to the gripper plane (12) between a first angular end position (41a) and a second angular end position (41b),
**characterized by**:
the first guide (20) comprises a first guide arm part (20a) arranged on the pivotal arm (40) and a first guide base part (20b) arranged on the gripper base (11), and the second guide (21) is arranged on the gripper base (11).

2. The gripper (10) according to claim 1, wherein the pivotal arm (40) can be rotated between 0-270 degrees, 0-180 degrees, or preferably 0-90 degrees.

3. The gripper (10) according to claim 1 or 2, wherein the gripper (10) comprises locking means (50) for locking the pivotal arm (40) in an angular position between the first angular end position (41a) and the second angular end position (41b).

4. The gripper (10) according to claim 3, wherein the locking means (50) are mechanical locking means (51) comprising pins (52) and holes (53) arranged in angular steps (54) configured for receiving the pins for locking the angular position of the pivotal arm (40).

5. The gripper (10) according to claim 4, wherein the pins (52) for locking the angular position of the pivotal arm (40) are electrically operated, pneumatic operated, hydraulic operated, or spring activated.

6. The gripper (10) according to any of the preceding claims, wherein the first guide (20) and the second guide (21) are linear guides.

7. The gripper (10) according to any of the preceding claims, the gripper (10) further comprises a drive shaft adapted to be controlled by a motor and wherein the drive shaft is arranged aligned with the rotational axis (42) and configured for rotating the pivotal arm (40).

8. The gripper (10) according to claim 7, wherein the locking means (50) are motor locking and/or brakes.

9. The gripper (10) according to any of the preceding claims, wherein the first clamp (30a) is automatically displaceable between an inner and an outer end position in the first guide (20) and the second clamp (30b) is automatically displaceable between an inner and an outer end position in the second guide (21).

10. The gripper (10) according to any of the preceding claims, the gripper (10) further comprises a controller configured to control the angular position of pivotal arm (40) and/or the position of the first clamp (30a) and/or the second clamp (30b).

11. Robotic arm (60) for handling rebars (80) of variable shape and size comprising the gripper (10) according to any of the preceding claims.

12. Method of adjusting the position of the first clamp (30a) and the second clamp (30b) of the gripper (10), according to any one of the claims 1-11, wherein the method comprises an act of rotating the pivotal arm (40) relative to the gripper base (11) around a rotational axis (42) perpendicular to the gripper plane (12) and/or adjusting the position of the first clamp (30a) in the first guide (20) and/or the second clamp (30b) in the second guide (30b).

13. A computer program comprising instructions to cause the gripper (10) according to any one or more of claims 1-11 to execute one or more steps of the method of claim 12.

14. A computer-readable medium having stored there on the computer program according to claim 13.

## Patentansprüche

1. Greifer (10) für einen Roboterarm (60), wobei der Greifer (10) zum Greifen von Stangen (80) konfiguriert ist, wobei der Greifer (10) Folgendes umfasst:
eine erste Klemme (30a) und eine zweite Klemme (30b), die jeweils für einen automatisch gesteuerten Betrieb zwischen einer offenen Position und einer geschlossenen Position ausgelegt sind, wobei die geschlossene Position diejenige ist, in der die Klemme die Stange (80) derart umklammert, dass die Stange (80) verschoben werden kann; und
eine Greiferbasis (11), die Roboterbefestigungsmittel (61) umfasst, die dazu ausgelegt sind, am Roboterarm (60) montiert zu werden, eine erste Führung (20) und eine zweite Führung (21), wobei die erste und die zweite Führung in einer Greiferebene (12) fluchtend angeordnet sind, wobei die erste Klemme (30a) verschiebbar in der ersten Führung (20) montiert ist und die zweite Klemme (30b) verschiebbar in der zweiten Führung (21) montiert ist,
wobei die Greiferbasis (11) einen Schwenkarm (40) umfasst, der in einer zur Greiferebene (12) parallelen Ebene drehbar angeordnet ist, wobei die erste Führung (20) mindestens teilweise am Schwenkarm (40) angeordnet ist, und wobei der Schwenkarm (40) um eine zur Greiferebene (12) senkrechte Drehachse (42) zwischen einer ersten Winkelendposition (41a) und einer zweiten Winkelendposition (41b) automatisch drehbar ist,
**dadurch gekennzeichnet, dass**:
die erste Führung (20) einen am Schwenkarm (40) angeordneten ersten Führungsarmteil (20a) und einen an der Greiferbasis (11) angeordneten ersten Führungsbasisteil (20b) umfasst und die zweite Führung (21) an der Greiferbasis (11) angeordnet ist.

2. Greifer (10) nach Anspruch 1, wobei der Schwenkarm (40) zwischen 0-270 Grad, 0-180 Grad oder vorzugsweise 0-90 Grad gedreht werden kann.

3. Greifer (10) nach Anspruch 1 oder 2, wobei der Greifer (10) Verriegelungsmittel (50) zum Verriegeln des Schwenkarms (40) in einer Winkelposition zwischen der ersten Winkelendposition (41a) und der zweiten Winkelendposition (41b) umfasst.

4. Greifer (10) nach Anspruch 3, wobei die Verriegelungsmittel (50) mechanische Verriegelungsmittel (51) sind, die Stifte (52) und Löcher (53) umfassen, die in Winkelstufen (54) angeordnet sind, die zum Aufnehmen der Stifte zum Verriegeln der Winkelposition des Schwenkarms (40) konfiguriert sind.

5. Greifer (10) nach Anspruch 4, wobei die Stifte (52) zum Verriegeln der Winkelposition des Schwenkarms (40) elektrisch betrieben, pneumatisch betrieben, hydraulisch betrieben oder durch Federkraft aktiviert werden.

6. Greifer (10) nach einem der vorhergehenden Ansprüche, wobei die erste Führung (20) und die zweite Führung (21) Linearführungen sind.

7. Greifer (10) nach einem der vorhergehenden Ansprüche, wobei der Greifer (10) ferner eine Antriebswelle umfasst, die dazu ausgelegt ist, von einem Motor gesteuert zu werden, und wobei die Antriebswelle mit der Drehachse (42) fluchtend angeordnet und zum Drehen des Schwenkarms (40) konfiguriert ist.

8. Greifer (10) nach Anspruch 7, wobei die Verriegelungsmittel (50) motorverriegelnd und/oder Bremsen sind.

9. Greifer (10) nach einem der vorhergehenden Ansprüche, wobei die erste Klemme (30a) zwischen einer inneren und einer äußeren Endposition in der ersten Führung (20) automatisch verschiebbar ist und die zweite Klemme (30b) zwischen einer inneren und einer äußeren Endposition in der zweiten Führung (21) automatisch verschiebbar ist.

10. Greifer (10) nach einem der vorhergehenden Ansprüche, wobei der Greifer (10) ferner eine Steuerung umfasst, die dazu konfiguriert ist, die Winkelposition des Schwenkarms (40) und/oder die Position der ersten Klemme (30a) und/oder der zweiten Klemme (30b) zu steuern.

11. Roboterarm (60) zum Handhaben von Stangen (80) mit variabler Form und Größe, umfassend den Greifer (10) nach einem der vorhergehenden Ansprüche.

12. Verfahren zum Einstellen der Position der ersten Klemme (30a) und der zweiten Klemme (30b) des Greifers (10) nach einem der Ansprüche 1-11, wobei das Verfahren eine Handlung des Drehens des Schwenkarms (40) relativ zur Greiferbasis (11) um eine zur Greiferebene (12) senkrechte Drehachse (42) und/oder des Einstellens der Position der ersten Klemme (30a) in der ersten Führung (20) und/oder der zweiten Klemme (30b) in der zweiten Führung (30b) umfasst.

13. Computerprogramm, umfassend Anweisungen, um den Greifer (10) nach einem oder mehreren der Ansprüche 1-11 zu veranlassen, einen oder mehrere Schritte des Verfahrens nach Anspruch 12 auszuführen.

14. Computerlesbares Medium, auf dem das Computerprogramm nach Anspruch 13 gespeichert ist.

## Revendications

1. Préhenseur (10) pour bras robotisé (60), ledit préhenseur (10) étant configuré pour saisir des barres d'armature (80), ledit préhenseur (10) comprenant :
- une première pince (30a) et une seconde pince (30b), chacune étant conçue pour un fonctionnement à commande automatique entre une position ouverte et une position fermée, la position fermée étant celle où la pince serre la barre d'armature (80) de telle sorte que la barre d'armature (80) puisse être déplacée ; et
- une base de préhension (11) comprenant des moyens de fixation robotisés (61) conçus pour être montés sur le bras robotisé (60), un premier guide (20) et un second guide (21), lesdits premier et second guides étant disposés alignés dans un plan de préhension (12), la première pince (30a) étant montée déplaçable dans le premier guide (20) et la seconde pince (30b) étant montée déplaçable dans le second guide (21),
dans lequel la base de préhension (11) comprend un bras pivotant (40) disposé pour tourner dans un plan parallèle au plan de préhension (12), le premier guide (20) étant au moins partiellement disposé sur le bras pivotant (40), et le bras pivotant (40) pouvant tourner automatiquement autour d'un axe de rotation (42) perpendiculaire au plan de préhension (12) entre une première position d'extrémité angulaire (41a) et une seconde position d'extrémité angulaire (41b),
**caractérisé en ce que** :
le premier guide (20) comprend une première partie de bras de guidage (20a) disposée sur le bras pivotant (40) et une première partie de base de guidage (20b) disposée sur la base de préhension (11), et le second guide (21) est disposé sur la base de préhension (11).

2. Préhenseur (10) selon la revendication 1, dans lequel le bras pivotant (40) peut être tourné entre 0 et 270 degrés, 0 et 180 degrés, ou de préférence 0 et 90 degrés.

3. Préhenseur (10) selon la revendication 1 ou 2, dans lequel le préhenseur (10) comprend des moyens de verrouillage (50) pour verrouiller le bras pivotant (40) dans une position angulaire entre la première position d'extrémité angulaire (41a) et la seconde position d'extrémité angulaire (41b).

4. Préhenseur (10) selon la revendication 3, dans lequel les moyens de verrouillage (50) sont des moyens de verrouillage mécaniques (51) comprenant des broches (52) et des trous (53) disposés en gradins angulaires (54) configurés pour recevoir les broches afin de verrouiller la position angulaire du bras pivotant (40).

5. Préhenseur (10) selon la revendication 4, dans lequel les broches (52) pour verrouiller la position angulaire du bras pivotant (40) sont à fonctionnement électrique, pneumatique, hydraulique ou sont actionnées par ressort.

6. Préhenseur (10) selon l'une quelconque des revendications précédentes, dans lequel le premier guide (20) et le second guide (21) sont des guides linéaires.

7. Préhenseur (10) selon l'une quelconque des revendications précédentes, le préhenseur (10) comprenant également un arbre d'entraînement adapté pour être commandé par un moteur et dans lequel l'arbre d'entraînement est disposé aligné avec l'axe de rotation (42) et configuré pour faire tourner le bras pivotant (40) .

8. Préhenseur (10) selon la revendication 7, dans lequel les moyens de verrouillage (50) sont des moyens de blocage de moteur et/ou des freins.

9. Préhenseur (10) selon l'une quelconque des revendications précédentes, dans lequel la première pince (30a) est automatiquement déplaçable entre une position d'extrémité intérieure et une position d'extrémité extérieure dans le premier guide (20) et la seconde pince (30b) est automatiquement déplaçable entre une position d'extrémité intérieure et une position d'extrémité extérieure dans le second guide (21).

10. Préhenseur (10) selon l'une quelconque des revendications précédentes, le préhenseur (10) comprenant également un dispositif de commande configuré pour commander la position angulaire du bras pivotant (40) et/ou la position de la première pince (30a) et/ou de la seconde pince (30b).

11. Bras robotisé (60) pour la manipulation de barres d'armature (80) de forme et de taille variables comprenant le préhenseur (10) selon l'une quelconque des revendications précédentes.

12. Procédé de réglage de la position de la première pince (30a) et de la seconde pince (30b) du préhenseur (10), selon l'une quelconque des revendications 1 à 11, dans lequel le procédé comprend une action de rotation du bras pivotant (40) par rapport à la base de préhension (11) autour d'un axe de rotation (42) perpendiculaire au plan de préhension (12) et/ou de réglage de la position de la première pince (30a) dans le premier guide (20) et/ou de la seconde pince (30b) dans le second guide (30b).

13. Programme informatique comprenant des instructions pour amener le préhenseur (10) selon une ou plusieurs des revendications 1 à 11 à exécuter une ou plusieurs étapes du procédé selon la revendication 12.

14. Support lisible par ordinateur sur lequel est stocké le programme informatique selon la revendication 13.
